# EUROPEAN PATENT SPECIFICATION

(11) **EP 2 088 872 B1**
(45) Date of publication and mention of the grant of the patent: **20.03.2019**
(21) Application number: 06818137.9
(22) Date of filing: 30.11.2006
(51) Int. Cl.: A23L 5/00, A21D 10/00, A21D 2/02, A21D 2/16, A21D 2/36, A21D 6/00, A23P 10/30, A23P 10/47, A23P 30/34

(54) **COATED CARRIERS**
BESCHICHTETE TRÄGER
SUPPORTS REVETUS

(30) Priority: 11.10.2006 DK 200601320
(43) Date of publication of application: 19.08.2009
(73) Proprietor: Palsgaard A/S, 7130 Juelsminde (DK)
(72) Inventor: FRAMBØL, Jens Viggo, DK-8660 Skanderborg (DK); JENSEN, Søren Albin, DK-7361 Ejstrupholm (DK); NORN, Viggo Creemers, DK-7140 Stouby (DK)
(74) Representative: Guardian IP Consulting I/S
(86) International application number: PCT/DK2006/000677
(87) International publication number: WO 2007/042045

(56) References cited:
- GB-A- 2 185 176
- US-A1- 2001 026 828
- MING-CHYI ET AL.: "Factors Affecting Starch Degradation of Rice Extruded by a Twin-Screw Extruder" JOURNAL OF THE CHINESE AGRICULTURAL CHEMICAL SOCIETY, vol. 31, no. 4, 1993, pages 497-505, XP008086484
- RYU ET AL.: "Effects of Emulsifiers on Physical Properties of Wheat Flour Extrudates with and without Sucrose and Shortening" LEBENSMITTEL-WISSENSCHAFT UND -TECHNOLOGIE, vol. 27, no. 5, 1994, pages 425-431, XP002494769
- DE PILLI ET AL: "Effect of some emulsifiers on the structure of extrudates with high content of fat" JOURNAL OF FOOD ENGINEERING, BARKING, ESSEX, GB, vol. 79, no. 4, 19 May 2006 (2006-05-19), pages 1351-1358, XP005728390 ISSN: 0260-8774
- MÄLKKI ET AL.: "Effects of Monoglycerides During Cooking Extrusion of Wheat Flour" SCANDINAVIAN FORUM FOR LIPID RESEARCH AND TECHNOLOGY, 1984, pages 130-137, XP008086476 TECH. RES. CENT. OF FINLDAND, FOOD RES. Lab., SF-02150 Espoo 15, Finland
- NABESHIMA ET AL.: "Effect of emulsifiers addition in pasta without gluten produced by thermoplastic extruder" BOLETIM DO CENTRO DE PESQUISA E PROCESSAMENTO DE ALIMENTOS, vol. 21, no. 2, 2003, pages 223-238, XP008086534
- AN-I ET AL.: "The Effect of Single Screw Extrusion Operation Variables on Properties of Rice Flour Extrudates" FOOD SCIENCE, TAIWAM, vol. 22, no. 2, 1995, pages 124-140, XP008086485

## Description

### Technical field of the invention

The present invention relates to a free-flowing powder product and its preparation. In particular, the invention relates to a substantially free-flowing powder product comprising coated carriers. The powder product is useful in various applications, particularly within the field of bakery ingredients.

### Background of the invention

Certain surface-active products, for example food-improving surface-active agents such as emulsifiers or aerating agents (aerating agent is a designation used in the food industry for an emulsifier, which is used for whipping purposes, in other words for preparing emulsions where air constitutes the disperse phase) for use in the food industry, such as emulsifiers which are partial fatty acid esters of glycerol or glycerol condensates, are substances of a fat-like consistency and behaviour, or expressed in another manner, substances of a lipid character. For addition to the products, which they are to aerate or emulsify, for example bread dough, cake mixes, or other food products, they are suitably used in the form of a powder, preferably a free-flowing powder.

It is known to prepare such powders by spray-drying or by application of the surface-active substance on sucrose particles as a carrier or e.g. by simple mixing. Thus, one known method for preparing such powders is to spray-dry an emulsion made from skim milk or whey and an emulsifier. Often, it is necessary to take special precautions to spray-dry the emulsion under particularly gentle conditions in order to avoid any substantial impairment of their surface-active properties. Spray-drying requires extensive apparatus and requires that the surface-active substance be converted into a dissolved or suspended state from which the solvent is removed in the spray-drying process. Owing to the parameters of the spray-drying process, there are certain limitations with respect to the composition of the final product, its specific gravity, etc. The method in which sucrose is used as a carrier comprises applying an emulsifier on sucrose particles, e.g. icing sugar, by mill mixing. In this method, it is normally not possible to apply more than about 10-15% by weight of the surface-active substance on the sucrose. This may be a too low concentration of emulsifier for certain purposes, and an emulsifier applied on sucrose will necessarily introduce a certain amount of sucrose into the products in which it is used, which is not always desired.

A co-processing method is disclosed in EP1106068 (Cognis Deutchland), wherein carriers such as vegetable flours are coated with emulsifier.

Another approach of coating carriers is known from US3708309. This document discloses coated carriers (dry cake mix) comprising 35-34% wheat flour, 30-60% sucrose, 0,5-2% baking powder and 1-16% of a mixture of dried and liquid oil. Emulsifiers are not appropriate for use in practicing the methods of this document. The coated carriers are prepared by extrusion.

Coated carriers prepared by extrusion are also known from EP0153870 (Nexus). This document discloses extrusion methods for coating carriers with 10-60% surface-active substance. However, in the examples it is shown that when surface-active substance is added in an amount of above 35% by weight, a greasy and thus undesirable product is obtained. The preferred carrier material is starch. The resulting coated carriers are suitable for use in e.g. cake baking along with baking powder and other ingredients.

Commercially available coated carriers are normally produced using purified starch as a raw material. The use of starch as a carrier is related to various advantages such as a relatively high carrier potential, a fine free-flowing powder, a white colour of the powder product as well as a bland and neutral taste. Starch is, however, a relatively expensive raw material, because the production method is laborious and dependent on the use of various chemicals, in particular chemicals such as strong alkaline substances. It is well known in the art that the use of vegetable flours as a carrier impede several problems such as a relatively low carrier capacity, a brownish colour, and an undesired off-taste compared to using starch as a raw material. The relatively high protein content in flour is thought to affect the carrier potential in a negative way.

### Summary of the invention

An object of the present invention is to provide cheaper and more efficient, cost-efficient, and environmentally friendly ways of producing high quality powders comprising coated carriers. It is furthermore an object to obtain free-flowing powders with improved functional properties, preferably devoid of unwanted off-tastes or discolorations. In particular, it is an object to obtain cheap and efficient methods resulting in carriers coated with larger amount of surface-active substance, while retaining free-flowing characteristics of the powder. It is furthermore an object that such powders are easy to administer to the compositions to which they are to be added, and are well compatible with products of the food or bakery industry. Finally, it is an object to obtain coated carriers with somewhat improved nutritional value. As a general rule, they should preferably be used in the same amount and in the same manner as other commercial forms of the surface-active substance, calculated on the basis of the weight of the surface-active substance.

In particular, it is an object of the present invention to provide powder products that solve the above-mentioned problems as well as methods for providing such products. The present invention provides tools for providing such products.

In a first aspect, the present invention thus relates to a method of preparing a free-flowing powder product, wherein said powder product comprises particulate carriers coated with a surface-active substance of lipid character, wherein such particulate carriers are selected from the group consisting of vegetable flours and vegetable brans and wherein said method comprises preparing a mixture by mixing one or more surface-active substances of lipid character in an amount of at least 10% by weight with one or more particulate carriers and optionally water in an amount of 0.1-5% by weight, and extruding the mixture through one or more orifices; wherein said method is further characterized by one or more of the following features:
a) one or more inorganic salts are added to the mixture prior to extrusion in an amount of 0.1-5% by weight of the carrier;
b) the carrier consists of rice flour derived from long grain type rice, wherein said rice flour is added to the mixture prior to extrusion;
c) the carrier consists of cake flour, wherein said cake flour is added to the mixture prior to extrusion.

The present invention furthermore relates to products that are obtainable by such methods.

In a second aspect, the present invention relates to a free-flowing powder product, obtainable by such methods, wherein said powder product comprises particulate carriers selected from the group consisting of vegetable flours and vegetable brans and coated with a surface-active substance of lipid character, wherein said powder product is further characterized by one or more of the following features:
a) said powder product comprises inorganic salts in an amount of about 0.1-5%;
b) said powder product comprises (i) coated starch particles and (ii) protein matrix substances, wherein (i) and (ii) are derived from long grain type rice;
c) said powder product comprises (i) coated vegetable starch particles as well as (ii) protein matrix substances, wherein (i) and (ii) are derived from vegetable flour;
d) said powder product comprises (i) coated starch particles and (ii) protein matrix substances, wherein (i) and (ii) are derived from cake flour.

In a final aspect, the present invention relates to use of powders according to the present invention in preparation of baked goods.

Addition of inorganic salts prior to the extrusion process is thought to have several effects:
(i) Addition of any salt surprisingly results in an improved extrusion providing larger amounts of surface-active substance while providing a free-flowing powder.
(ii) Carbon dioxide producing salts apparently have the capacity of making the extrusion more efficient due to the carbon dioxide releasing effects.
(iii) Finally, it is conceivable that salts may contribute to partial degradation of the protein matrix encapsulating starch particles within vegetable flour grains. Starch particles are thus more efficiently released from the protein matrix during extrusion of flour grains.

In support of these findings, it has furthermore been found that some flour grain types seem to be particularly useful in connection with the present invention. These findings are described in detail in the following. Fully or partial replacement of starch raw material with vegetable flour enables a more cost-efficient technology as well as production of a product with better functional properties and a somewhat improved nutritional value.

### Detailed description of the invention

### Definitions:

Prior to discussing the present invention in further details, the following terms and conventions will first be defined:

### Free-flowing:

"Free-flowing" powder is herein meant to comprise powders/particles that are relatively easy to pour. Free-flowing powders or particles usually have an average particle size of at least about 1, 2, 3, 4, 5, 10, 20, 30 40, 50, 60, 70, 80, 90, 100, 150, 200, 250 or 300 µm. Free-flowing powders may however comprise relatively small quantities of very small particles (about 1 µm) and rather large particles (up to about 1mm). Free-flowing powders may also comprise subject-matter such as e.g. protein matrix substances and minerals and/or salts. Powder products prepared according to the present invention preferably have a relatively even and homogenous size distribution and are preferably substantially free-flowing.

### Particulate carriers:

"Particulate carriers" or "carriers" comprise any edible carrier falling within the definition of a free-flowing powder product. However, the exclusive use of inorganic substances as carriers such as e.g. salts is not desirable according to the present invention. It is preferred that the carrier raw material is of vegetable origin, and the most preferred carriers are selected from vegetable flours, vegetable bran such as e.g. wheat bran, rice bran, rye bran, pea bran or bean bran, starches, oligo- and polysaccharides, mono- and disaccharides and pentosans, maltodextrins, dextrose, fructose, sucrose and any mixtures thereof, optionally with an admixture of material of vegetable fibre origin. It is most preferred to use vegetable flours in connection with the present invention, since this material is more cost-efficient on an industrial scale compared to e.g. commercially available starches that are traditionally used. In contrast to e.g. the extrusion techniques disclosed in EP0153870, it seems to be unnecessary to use starch as a raw material, thus offering more cost-efficient production methods. Examples of vegetable flours include flour from bean, pea, rice, potato, corn, Chinese water chestnut flour as well as cereal flours from wheat, rye, barley, and oat as well as any mixtures thereof. The extruded product has a number of advantages compared to conventional extruded products.

Other compounds such as dried milk solids, salts, bone meal or blood meal, chalk, bentonite, talc, etc. may also be used as carriers. It is contemplated that it may be advantageous to secure a very fine particle size of the carriers, such as 1-5 µm or finer, by subjecting the carriers to additional comminution beyond the comminution which such products (for example flours or starches) have normally been subjected to. Such additional comminution may e.g. be performed in a circular-chamber jet mill or a blender type mill either before or after extrusion.

### Surface-active substances:

Surface-active substances/surfactants: Any substance that lowers the surface or interfacial tension of the medium in which it is dissolved. The substance does not have to be completely soluble and can lower surface or interfacial tension by spreading over the interface. Soaps (fatty acid salts containing at least eight carbon atoms) are surfactants. Detergents are surfactants, or surfactant mixtures, whose solutions have cleaning properties. Also referred to as "surface-active agents" or, for synthetic surfactants, "tensides". The term "surfactant" was originally a trademark of the General Aniline and Film Corp. and later released to the public domain. The term "paraffin-chain salts" was used in older literature. In some usage, surfactants are defined as "molecules capable of associating to form micelles". "Surface-active substances" are preferably surface-active substances of lipid character, in particular food-improving surface-active agents such as e.g. emulsifiers or aerating agents for use in the food industry, in particular the bakery industry. Many surface-active substances suited for use as aerating emulsifiers in whipped batter for cakes are characterized by exhibiting a semi-solid and waxy appearance and cannot be used directly in cake preparation, but have to be processed in solution as a hydrate or brought on to a carrier system, where a stable powder comprising emulsifier and carrier can be used directly in cake batter obtaining the full benefit of the interphase active emulsifiers. The functional properties of the surface-active substance can thus easily be released into e.g. a cake batter even at temperatures far below the melting point of the surface-active substance.

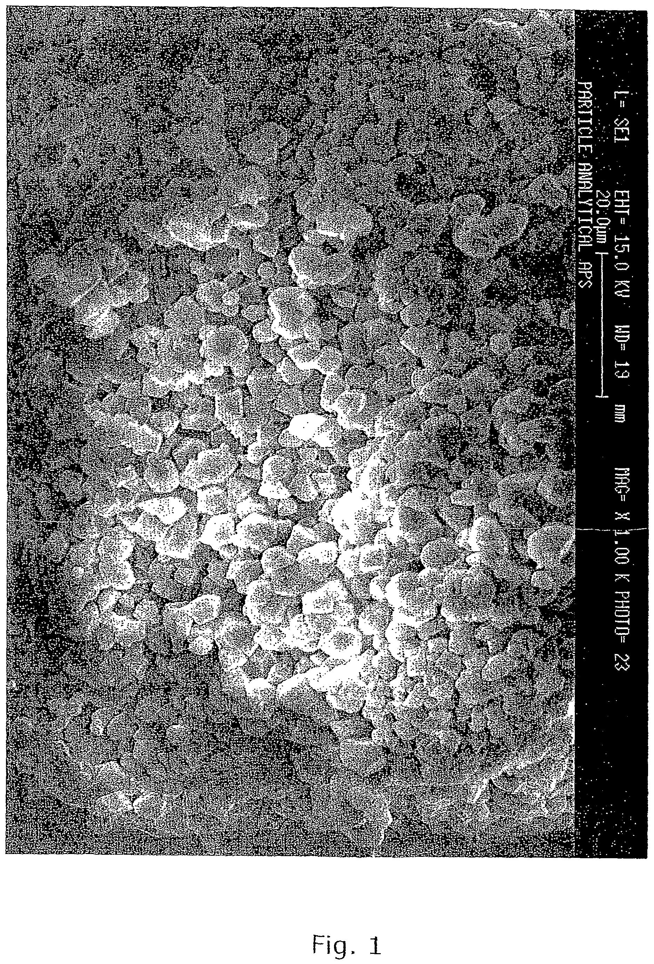

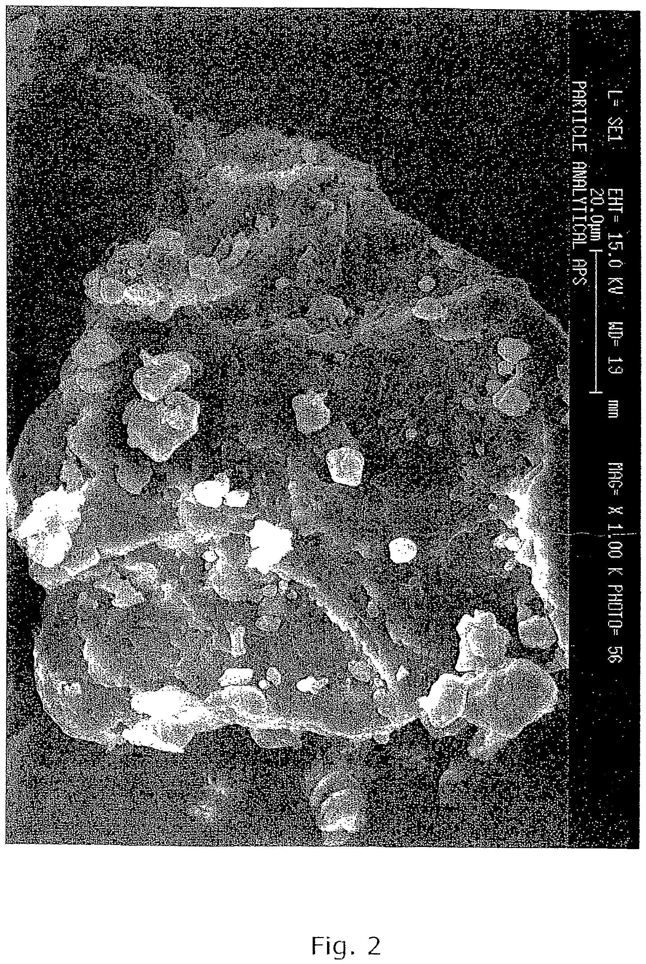

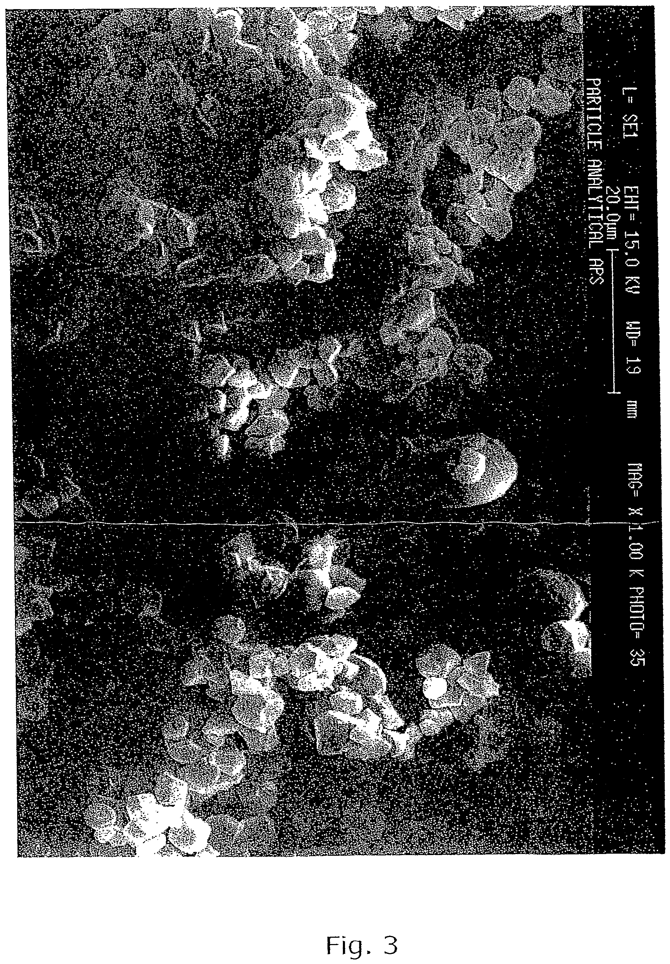

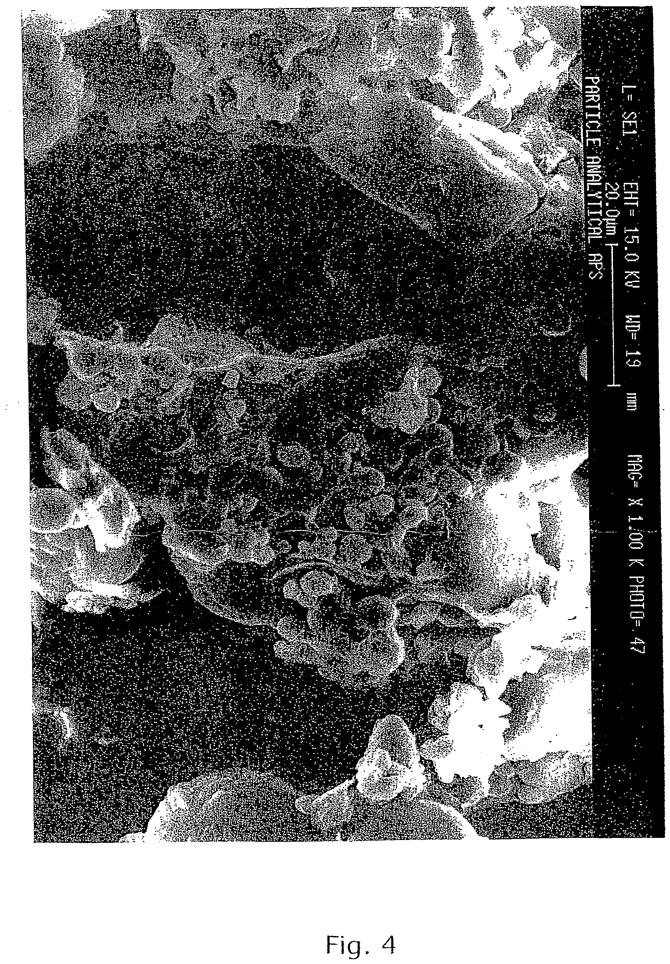

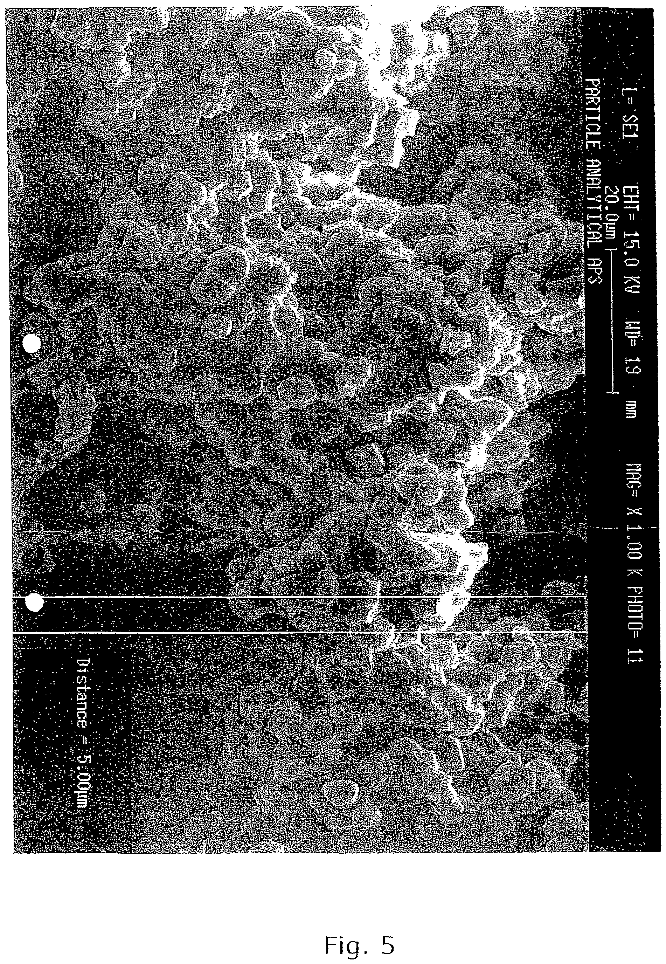

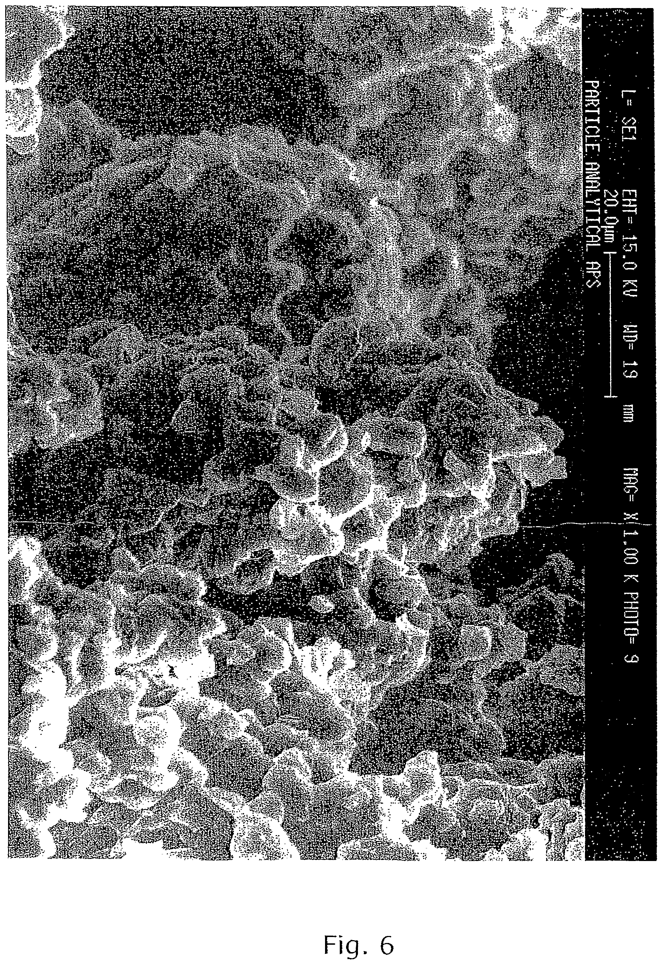

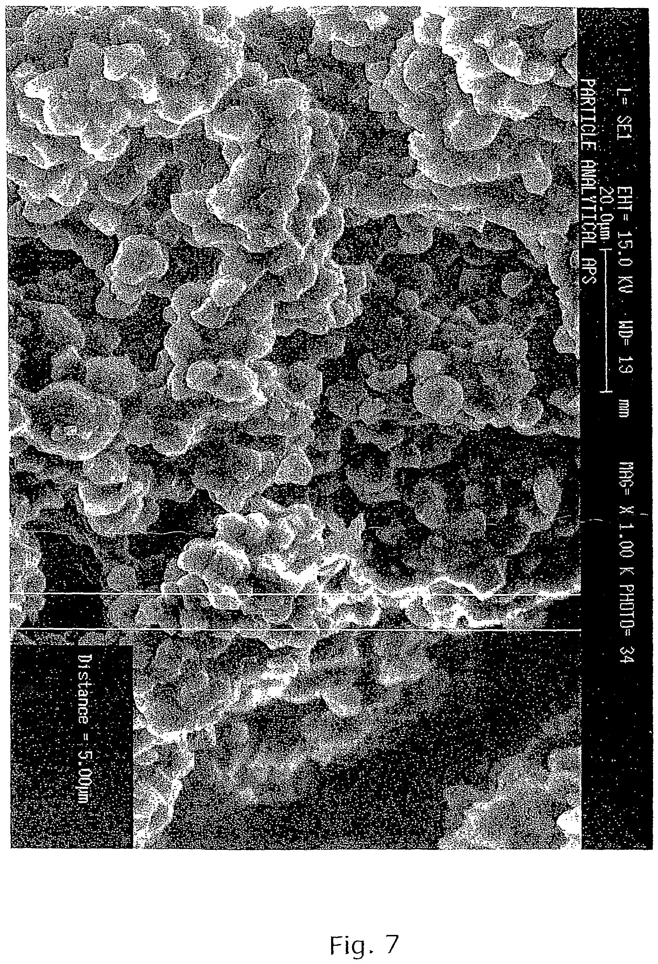

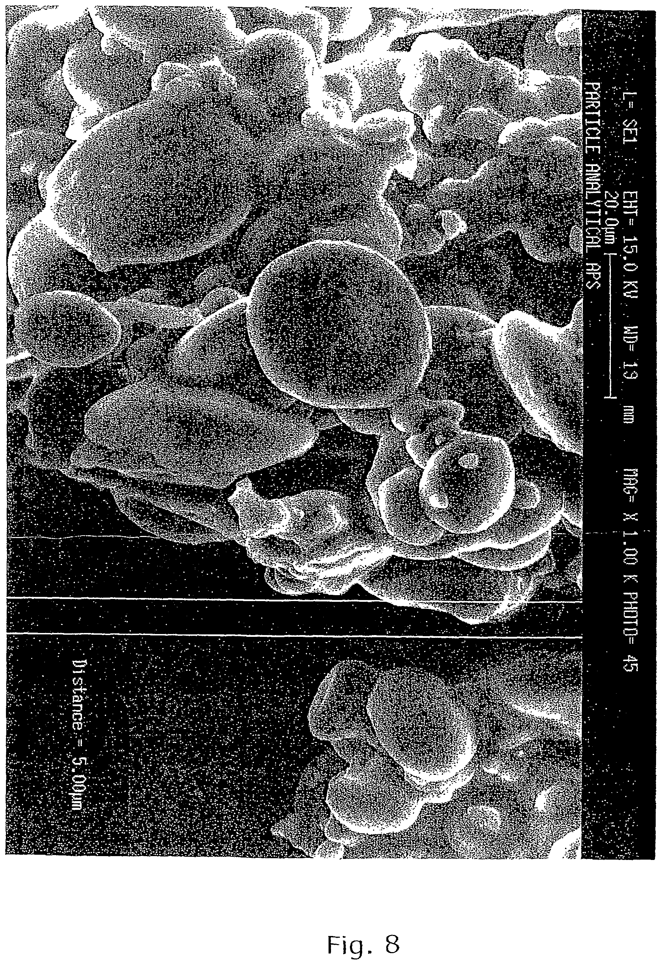

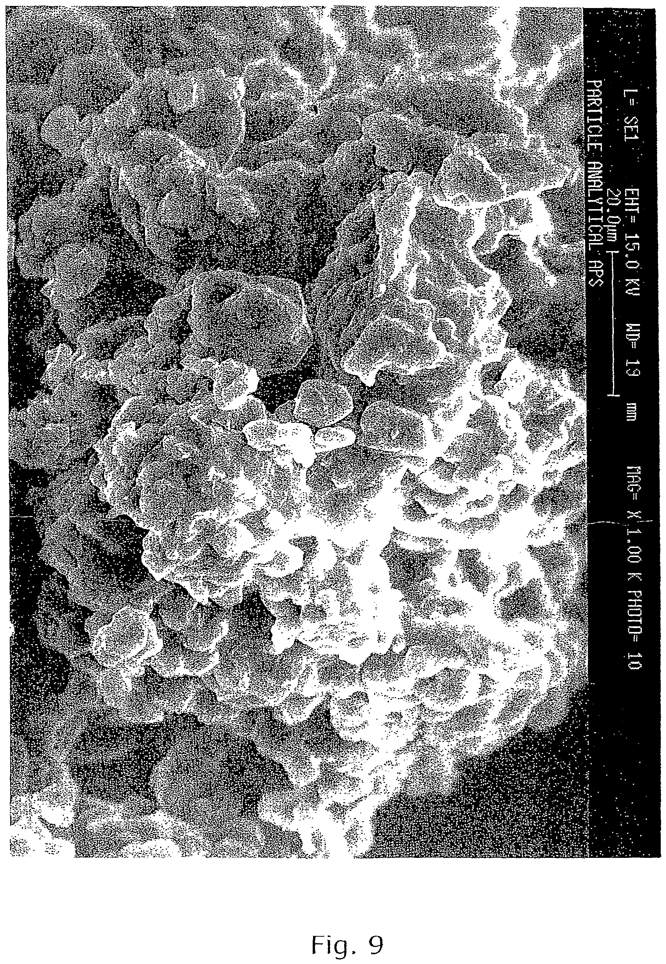

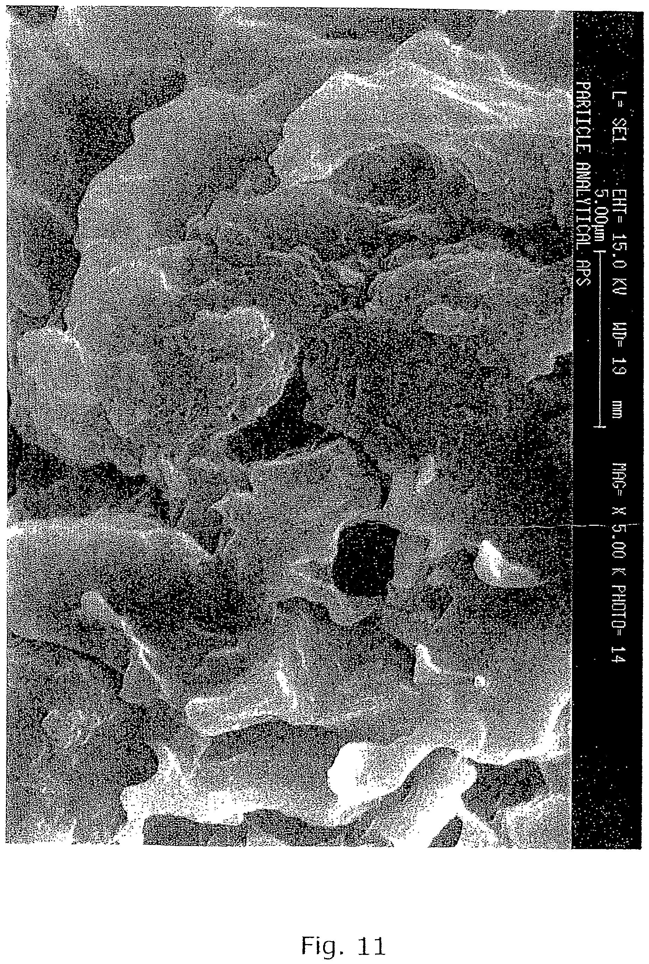

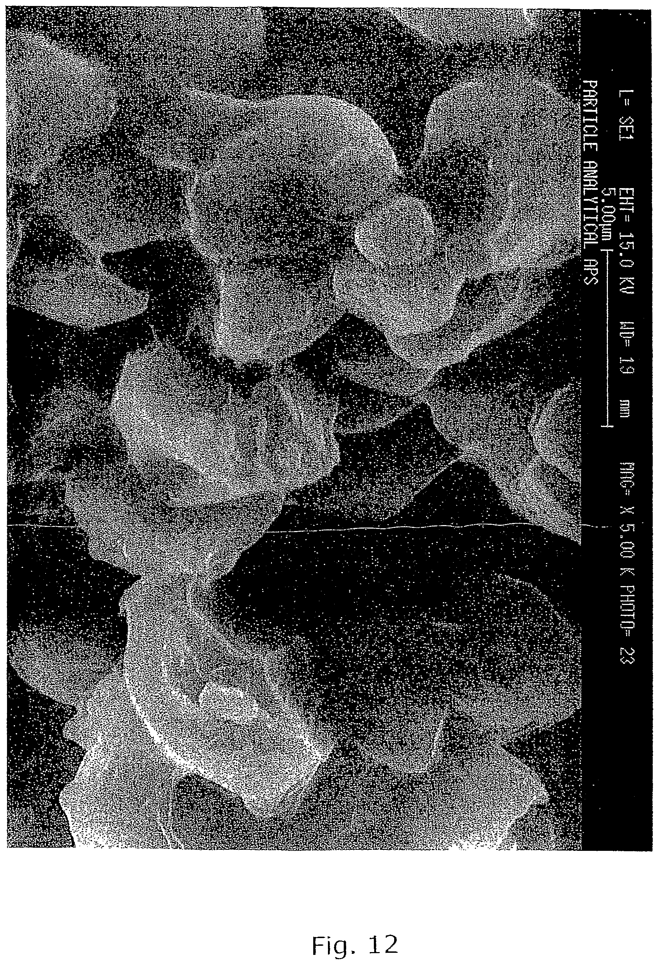

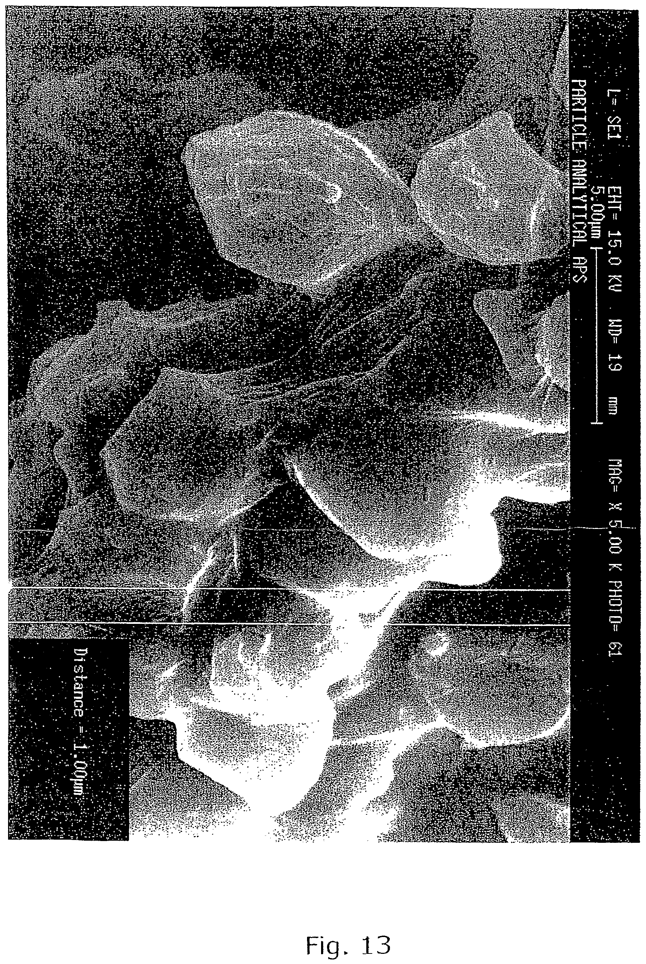

In its broadest sense, the term "surface-active" indicates a product, which is able to effectively "wet" the carrier under the mixing conditions prevailing. Examples of such substances include dough-improving agents, dough emulsifiers, antitack agents, meat water-binding improving agents, aerating agents for use in the food or bakery industry, ice cream emulsifiers, fine food emulsifiers, crystal growth-modifying agents for use in confectionery, pharmaceutical surface-active agents and/or cosmetic surface-active agents or any mixtures thereof. It is believed that the surface-active substances are adsorbed to the carrier. It is thought that a number of individual particles will agglomerate, but tend to disintegrate into the individual particles when handled (see also SEM pictures in fig. 1-13). The process according to the present invention will result in a relatively homogenous distribution of the surface-active substances on the carriers. According to the present invention, surface-active substances are applied on a particulate carrier preferably in an amount of at least 10% by weight, calculated on the weight of the product. More preferably, the amount of surface-active substances is at least 15%, more preferably at least 20%, even more preferably at least 25%, even more preferably at least 30%, even more preferably at least 35 %, and most preferably at least about 40% by weight.

### Emulsifier:

The surface-active substance or substances may comprise an "emulsifier", in particular a food emulsifier, optionally with an admixture of a component or components, which it may be conventional and/or desirable to combine with an emulsifier, such as a stabiliser, a thickening agent and/or a gelling agent or mixtures of such additions. Normally, such admixtures added to the surface-active substance or substances will constitute at the most 20%, preferably at the most 10%, and more preferably at the most 5% of the combined weight of the surface-active substance or substances and the admixture, and for most purposes, it is preferred that the admixture or admixtures of stabilizer, thickening agent and/or gelling agent, when present, constitute at the most 1% of the combined weight of the surface-active substance or substances and the admixture. If it is desired to have a stabilizer, a thickening agent and/or a gelling agent present in the product, it may also be incorporated as part of the carrier.

As examples of stabilizers or thickening agents may be mentioned alginates, carboxymethyl cellulose, and microcrystalline cellulose, and as an example of a gelling agent may be mentioned pectin.

Important embodiments of the invention are powders in which the surface-active substance is an emulsifier, which is a partial ester of a polyhydric alcohol such as ethylene glycol or glycerol or of a condensate of ethylene glycol or of glycerol, a sugar, or sorbitol, with an edible fatty acid and optionally with lactic acid, citric acid, malic acid, tartaric acid or acetic acid, or a mixture of such esters, optionally with an admixture of at the most 20%, preferably at the most 10%, more preferably at the most 5%, and most preferably at the most 1%, of a stabilizer, thickening agent and/or gelling agent, e.g. a gelling agent of the alginate type. As is well known, emulsifiers of types as mentioned above may obtain better emulsifying properties for certain purposes when they are combined with substances, which are not in themselves surface-active, such as a partial ester of propylene glycol and/or a propylene glycol condensate with a fatty acid. Such combinations are also contemplated for use in connection with the present invention. Other examples of food-improving emulsifiers are lecithin and modified lecithin, which are used, e.g. as flour-improving agent or as dough-improving agent. Particularly preferred emulsifiers according to the present invention include polyglycerol ester, and or combinations of other food emulsifiers e.g. propylenglycolmono esters, polysorbates, lactic acid esters of monoglycerides, mono-di-glycerides, stearoyl lactylates, acetic acid esters of mono-di-glycerides, DAVE, sugar esters and/or sucroglycerides as well as any mixtures thereof.

Among the above-mentioned food emulsifiers, very interesting food emulsifiers for incorporation in the products of the invention are partial esters of glycerol and/or glycerol condensates.

### Coating:

It has been found that when a surface-active substance and a suitable particulate carrier, in particular a carrier which is able to become "wetted with" or to "sorb" (adsorb and/or absorb) the surface-active substance under the conditions prevailing, is subjected to extrusion, it is possible to obtain an extrudate, which, instead of having the form of an extruded string of the mixture, immediately disintegrates into a powder product with highly desirable properties. While extrusion is described in detail herein, it is contemplated that also other treatments, which influence the mixture in a similar manner, such as high shear mixing and subsequent efficient exposure/distribution, may be used to obtain the same effect. Such other treatments, which result in the formation of substantially free-flowing powder products are considered "equivalents" to the extrusion herein.

The mixing of the constituents is suitably performed immediately prior to the extrusion in the mixing/transport means of the extruding equipment. This transport means is typically a screw mixer such as a double screw mixer. The temperature in the last part of the screw mixer (and hence approximately the temperature of the mixture subjected to extrusion) is normally in the range of 80-180°C., preferably 110-150°C, and most preferably 120-140°C. The orifice or each orifice through which the mixture is extruded will normally have a diameter of from about 1/2 to about 8 mm; often, a diameter of about 1-4 mm, such as about 2 mm, is very well suited, thus ensuring that extrusion takes place under pressure.

The mixture subjected to the extrusion normally has a free water content (water which is not chemically bound) at 1-30% by weight, especially 5-25% by weight. In certain cases, it may be found advantageous to add a small percentage of water, such as 0.1-5% by weight, in particular 0.1-3% by weight, to the mixer together with the surface-active substance and the carrier. Addition of water is thought to enhance the extrusion process by generating additional force to the extrusion process due to the steam effect.

The optimum combination of particular conditions maintained in the extrusion, such as orifice diameter, rotational speed of the screws, the temperature of the mixtures extruded, and the rate with which the mixture is extruded, may be ascertained by preliminary test runs for each particular combination of surface-active substance and carrier; suitable values for these parameters are illustrated in the Examples.

### Inorganic salts:

In connection with the present invention, it has surprisingly been found that addition of inorganic salts to the mixture prior to extrusion results in an improved extrusion process and an improved product with improved functional properties. These effects include improved carrier potential, and a more fine and white powder. The effects are particularly pronounced in mixtures where at least a part of the carrier particles is vegetable flour. There may be several explanations for the improved product. Apparently, the salt by some unknown mechanism surprisingly improves the carrier-potential of the carriers by enabling larger amounts of surface-active substances to become adhered to the carrier while still resulting in a free-flowing powder. In general, it is preferred to obtain coated carriers impregnated with as much surface-active substance as possible, especially if the carriers are used for e.g. cake baking. Free-flowing powder is easy to mix with other cake baking ingredients. Carbon dioxide producing salts apparently have the capacity of making the extrusion more efficient. This effect is thought to be due to the carbon dioxide releasing effects resulting in a more powerful extrusion process.

Finally, it is conceivable that salts may contribute to a partial degradation of the matrix surrounding the starch particles within vegetable flour grains. Starch particles are thus more efficiently released from the protein matrix during extrusion of flour grains. It is thus conceivable that addition of salt enables extrusion processes under milder conditions (e.g. lower temperature). Addition of salts may furthermore enable use of flour carriers that are not normally able to disintegrate into starch particles and matrix components during extrusion. Finally, it is conceivable that addition of salts results in a more complete dissociation of starch particles and matrix components resulting in a finer free-flowing powder.

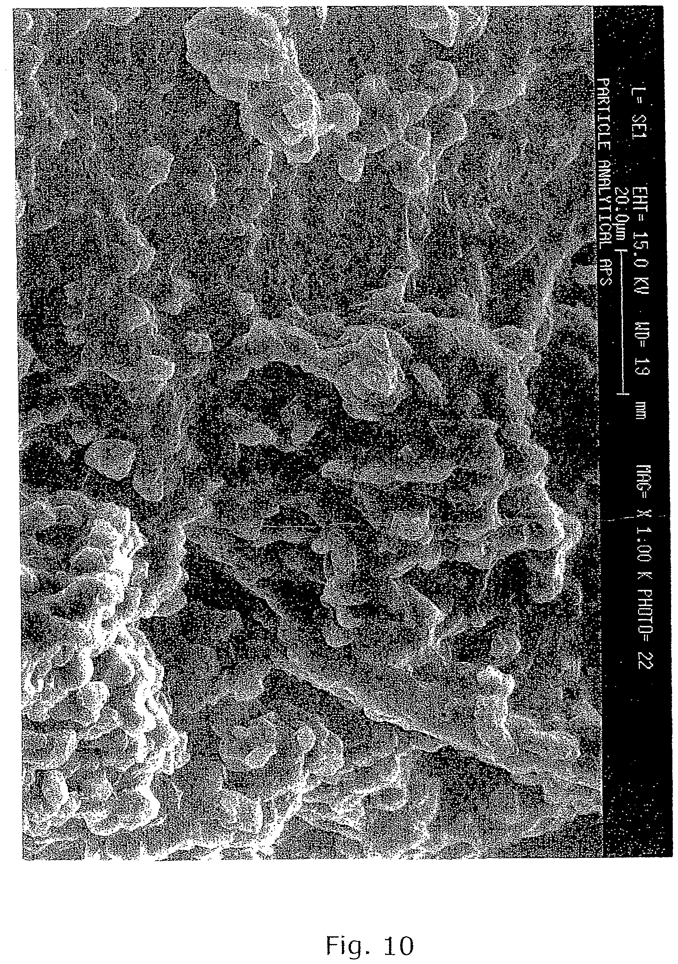

Use of salts in protein modification is known from a completely different field, namely production of cream cheese, wherein addition of e.g. sodium hexa metaphosphate modulates the ability of the milk proteins to coagulate during the fermentation process. As shown in figures 10-13 as well as in the examples, addition of inorganic salts in connection with the present invention may also be able to modulate the protein matrix in vegetable flour grains, enabling a more complete dissociation of starch particles and matrix components resulting in coated carriers with improved functional properties. Other salts such as e.g. disodium hydrogen pyrophosphate, tetrasodium pyrophosphate, disodiumphosphate, trisodiumcitrate, and urea are also suitable for use in connection with the present invention.

Alkaline salts are furthermore used in connection with purification of starch particles from vegetable flour, and it is conceivable that similar effects are obtained during the extrusion process with the aid of salts such as alkaline salts.

Examples of other useful salts include: sodium-, potassium-, calcium-, magnesium-, or aluminium salts selected from phosphates, polyphosphates, hydrogen phosphates, hydrogen polyphosphates, hexametaphosphates, carbonates, hydrogen carbonates and hydroxides. Preferred salts include sodium carbonate, potassium carbonate, ammonium carbonate, calcium carbonate, magnesium carbonate, sodium hydrogen carbonate, potassium hydrogen carbonate, ammonium hydrogen carbonate, sodium phosphate, sodium polyphosphate, sodium hydrogen phosphate, sodium hydrogen polyphosphate, sodium hexametaphosphate, potassium phosphate, potassium polyphosphate, potassium hydrogen phosphate, potassium hydrogen polyphosphate, potassium hexametaphosphate, sodium aluminium phosphate, and any mixtures thereof.

A particularly preferred salt includes sodium aluminium phosphate such as e.g. "Budal 2308" purchased from Chemische Fabrik Budenheim in Germany. This salt seems to result in an improved carrier potential. The effect seems to be most pronounced when vegetable flour is used as a carrier in contrast to e.g. using purified starch as a carrier. Addition of salt to the extrusion process thus enables a less laborious, more efficient end more cost-efficient process.

According to the present invention, salt is added in an amount of 0.1-5% by weight of the carrier, more preferably in an amount of 0.1-3%, and most preferably in an amount of about 0.5-2% by weight.

Likewise, powder products comprising coated carriers obtained by methods employing addition of salt prior to extrusion are different compared to conventional coated carriers. Obviously, the content of salts/minerals is relatively high. In case vegetable flour has been used as a raw material the coated carriers will, in addition to having an elevated salt-content, furthermore have protein content of up to about 20%. Salt is preferably present in an amount of 0.1-5% by weight of the coated carrier, more preferably in an amount of 0.1-3%, and most preferably in an amount of about 0.5-2% by weight.

### Gelling temperature:

In connection with the present invention, it has been found that the gelling temperature of the vegetable flour carriers may be an important factor in determining the functionality of the extrusion process. In the literature, gelling temperature is sometimes also referred to as "the gelling point", "the starting gel point" or "the pasting temperature" and these terms can be used interchangeably.

In particular it has been found that it is preferred to use flour types with relatively high gelling temperatures such as at least about 72°C and most preferably at least about 73°C. It is thus preferred to use flour types with gelling temperatures of about 73-86°C, preferably about 77-86°C and most preferably even higher gelling temperatures. In many cases, the extrusion temperature is higher than the gelling temperature and the reason why the starch particles usually do not start gelling under extrusion is that the heating step during extrusion takes place within a very short time not allowing the gelling process sufficient time to occur. Furthermore, if water is present and/or is added to the process, it is present only in relatively small amounts, thereby normally not allowing the gelling process to occur. In particular, the gelling process is more unlikely to occur if the flour used as a carrier has a relatively high gelling temperature. According to the present invention, it is important to avoid gelling reactions, since gelling may result in a powder that is not sufficiently free-flowing. Gelling may furthermore cause an unwanted partial or complete clotting of the extrusion equipment.

Gelling temperatures can be measured by means of various commonly used methods such as e.g. RVA-equipment, Brabender Viskographs, DSC-methods (Differential Scanning Calorimetry), etc. Slightly different gelling temperatures may be recorded using different analytical methods. Gelling temperatures according to the present invention have been measured using RVA-methods (see the Examples).

It is not known in detail which factors are responsible for the gelling point of starchy materials. It is however known that various factors such as e.g. plant variety, climatic conditions, type of soil, etc. may affect the gelling temperature of the grains. It has also been speculated that a relatively low amylopectin:amylose ratio favours a high gelling temperature.

### Long grain type rice:

In connection with the present invention it has been found that when using rice flour as a carrier it is generally preferred to use rice flour derived from "long grain" type rice and/or "medium grain" type rice as opposed to using rice flour derived from e.g. "round grain" (e.g. Müllers Mühle "Rundkorn Reismehl"). It may also be possible to use rough rice grains with hull removed ("brown rice", e.g. "Remyflo C 200) derived preferably from long grain or medium grain type rice. Apparently, flour from long grain type rice has a higher carrier potential compared to other flour types. Furthermore, coated carriers derived from long grain type rice flour generally result in a powder with an appealing white colour (depending on the protein content and the milling) obtained in a more natural way avoiding the process steps normally associated with starch production. Examples of useful rice flours include the commercially available long grain rice type such as "Remyflo R7" flour types in general and specifically e.g. "Remyflo R7-90T" purchased from Remy Industries in Belgium. Other examples are: Müllers Mühle" Langkorn Reismehl", Bayrische Reismühle "Reispudermehl", Rickmers Reismühle "Reispuder", and NCB "Boost". Most rice flour types seem to have relatively high gelling temperatures (from about 70-86°C). It has been reported that flour derived from long grain type rice tend to have a relatively low content of amylopectin. A low content of amylopectin probably contributes to the generally relatively high gelling points of such rice types. Generally, short grain or round grain rice types have a grain length of not more than 5 mm. Medium grain rice types generally have a length of about 5-6 mm and long grain rice types generally have a grain length of about 6-8 mm or more.

### Vegetable flour:

Vegetable flour is herein defined as a fine powder made from grain or other starchy food sources. A number of advantages are associated with using vegetable flour as a carrier opposed to using e.g. starch as a carrier. One advantage is that flour is a more cost-efficient raw material compared to purified starch, which is conventionally used as a carrier within the field. Furthermore, vegetable flour is available in almost unlimited amounts, whereas purified starch is only produced in limited amounts by a relatively low number of starch producers. Starch production furthermore employs various chemical and physical processes and use of vegetable flour is therefore both more cost-efficient and more environmentally friendly. Use of certain types of vegetable flour as a carrier, such as e.g. flour from long grain rice types according to the present invention, furthermore surprisingly confers a number of functional advantages to baked products resulting from use of coated carriers: better crumb softness, and/or better eating quality, and/or better shelf life, and/or a larger cake volume compared to products based on pure starch. According to the present invention, it is possible to add 0-10% insoluble rice protein (such as e.g. Remypro N80+) to the carrier (rice starch) without affecting the carrier potential. A creamy coloration furthermore seems to be the effect of adding protein to the carrier raw material.

### Flour that is capable of disintegrating into starch particles and the surrounding protein matrix under extrusion:

In the present application various examples of flour types that are suitable for use as carriers are contemplated herein, in particular because of their capacity to disintegrate (fully or partly) into starch particles and the surrounding matrix (figures 1-13). However, other flour carrier types that would be suitable for use herein also include other flour types that have the capacity to disintegrate into starch particles and protein matrix during the extrusion process. Such flour types include e.g. flour enriched with digestive enzymes, such as e.g. cellulases and proteases but also flour treated with chemicals such as e.g. KOH, NaOH, etc. having the ability to partially or fully degrade the matrix. Flour that has been subject to additional mechanical and/or physical treatment such as ultrasound, radiation, sonification, milling, heating, etc., or mixtures thereof may also have a weakened matrix surrounding the starch particles and are as such suitable for use in connection with the present application.

### Gluten/cake flour:

Cake flour is herein understood to be vegetable flour, preferably derived from wheat, having relatively low gluten content and a relatively low protein content (preferably a protein content of 10% or less). These properties are usually obtained by selecting suitable wheat plant varieties preferably in combination with suitable climatic conditions, type of soil, amount of fertilizer, etc. Gluten is found in some cereals (e.g., wheat, rye, barley) and their end products. Flour with low gluten content is sometimes referred to as "soft" flour. No gluten is contained in rice (even glutinous rice), wild rice, maize (corn), millets, buckwheat, quinoa, or amaranth. Non-cereals such as soybeans and sunflower seeds e.g. contain no gluten either.

Previously, chlorinated flour was sometimes used as cake flour. Chlorinated cake flour would therefore often have a relatively high protein and gluten content, but the *functionality* of gluten would be weakened to some degree due to the harsh chemical treatment. Use of chlorinated cake flour is now prohibited many places in the world probably due to the potential toxicity of the flour and the negative environmental impact resulting from the production methods of this flour type. It is however understood that also chlorinated cake flour may be used in connection with the present invention, even though this is certainly not a preferred embodiment. A more correct definition of cake flour according to the present invention may thus be vegetable flour with a relatively low content of *functional* gluten. It follows that it is conceivable that gluten functionality can be modified by a number of other physical/chemical/mechanical methods.

The gluten content in vegetable flour varies rather much depending on the method of analysis. Furthermore, there are practical difficulties associated with analytical measurements of the content of functional gluten in vegetable flour. As a consequence, it is difficult to define clear border lines with respect to the precise requirements as to the content of functional gluten in cake flour. However, in connection with e.g. a simple baking test, the skilled man will easily determine whether or not the flour in question is suitable for use in traditional cake baking.

Wheat flour with high gluten content of functional gluten is sometimes referred to as "strong flour" or "bread flour". Bread flour usually contains more than 10% protein, preferably about 12-14%. A major part of the total protein content is constituted by gluten.

### Brief description of the figures

**Figure 1****:** Rice starch particles magnified 1000 times using Scanning Electron Microscopy (SEM). A few particles have a size of about 1 µm or even less. A majority of the rice starch particles apparently have sizes of about 2-7 µm.
**Figure 2****:** Rice flour particle of the "Remyflo R7 200T" type magnified 1000 times using SEM. This rice flour type apparently comprises very large particles (50-120 µm) as well as particles at a few µm.
**Figure 3****:** Rice flour particles of the "Remyflo R7-90T" type magnified 1000 times using SEM. This rice flour type apparently has a particle size distribution, which resembles that of the rice starch particles in figure 1.
**Figure 4****:** Wheat cake flour particles magnified 1000 times using SEM. Large globular wheat starch particles can be seen faintly.
**Figure 5****:** Extruded rice starch comprising 35 weight% emulsifier and magnified 1000 times using Scanning Electron Microscopy (SEM). The raw material is depicted in figure 1.
**Figure 6****:** Extruded rice flour of the "Remyflo R7 200T" type comprising 28% emulsifier and magnified 1000 times using Scanning Electron Microscopy (SEM). These extruded coated carriers appear to have a size distribution that is comparable to that of the extruded rice starch in figure 5. The raw material is depicted in figure 2.
**Figure 7****:** Extruded rice flour of the "Remyflo R7-90T" type comprising 35% emulsifier and magnified 1000 times using Scanning Electron Microscopy (SEM). These extruded coated carriers appear to have a size distribution that is comparable to that of the extruded rice starch in figure 5. The raw material is depicted in figure 3.
**Figure 8****:** Extruded wheat cake flour comprising 23% emulsifier and magnified 1000 times using Scanning Electron Microscopy (SEM). It appears that the coated globular starch particles have been released from the large flour grains in connection with the extrusion process. The raw material is depicted in figure 4.
**Figure 9****:** Extruded rice flour of the "Müllers Mühle Langkorn Reismehl" type comprising 26% emulsifier and magnified 1000 times using Scanning Electron Microscopy (SEM). The structure of the raw material is very similar to that of "Remyflo R7 200T" depicted in figure 2, i.e. having rather large grain particles. However, the extruded product resembles extruded rice starch depicted in figure 5.
**Figure 10****:** Extruded rice flour of the "Müllers Mühle Langkorn Reismehl" type comprising 26% emulsifier and magnified 1000 times using Scanning Electron Microscopy (SEM). Prior to extrusion, the rice flour was mixed with 2 weight% sodium hexa metaphosphate.
**Figure 11****:** 5000 times magnification of the extruded rice flour of the "Müllers Mühle Langkorn Reismehl" type depicted in figure 9.
**Figure 12****:** 5000 times magnification of the extruded rice flour of the "Müllers Mühle Langkorn Reismehl" type with 2% sodium hexa metaphosphate depicted in figure 10.
**Figure 13****:** 5000 times magnification of extruded rice starch depicted in figure 5.

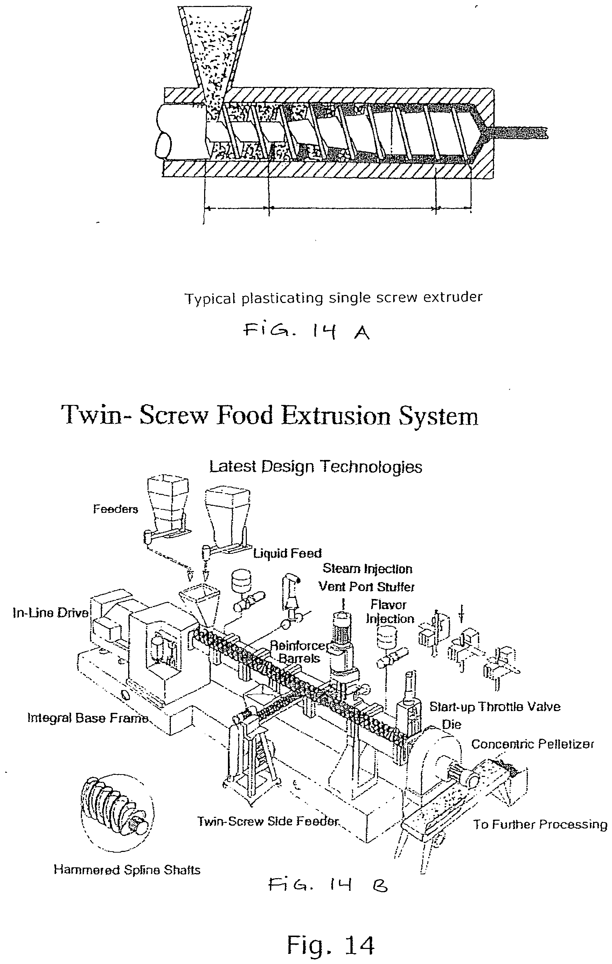

**Figure 14****:** A: shows a schematic representation of a single screw extruder. B: shows a schematic representation of a double (twin) screw extruder.
**Figure 15****:** Gelling point analysis. Viscosity of a solution comprising carrier material and water is continuously recorded during heating. Comparison of onset of gelling: Round grain rice flour and long grain rice flour, respectively (both from Müllers Mühle).
**Figure 16****:** Gelling point analysis. Viscosity of a solution comprising carrier material and water is continuously recorded during heating. Comparison of onset of gelling: Remyflo R6 (rice flour type with a medium gelling point) and Remyflo R7 (rice flour type with a high gelling point, possible of the long grain type), respectively.
**Figure 17****:** Gelling point analysis. Viscosity of a solution comprising carrier material and water is continuously recorded during heating. Comparison of onset of gelling: wheat starch and cake flour.

In a first aspect, the present invention relates to a method of preparing a free-flowing powder product, wherein said powder product comprises particulate carriers coated with a surface-active substance of lipid character, wherein such particulate carriers are selected from the group consisting of vegetable flours and vegetable brans and wherein said method comprises preparing a mixture by mixing one or more surface-active substances of lipid character in an amount of at least 10% by weight with one or more particulate carriers and optionally water in an amount of 0.1-5% by weight, and extruding the mixture through one or more orifices; wherein said method is further characterized by one or more of the following features:
a) one or more inorganic salts are added to the mixture prior to extrusion in an amount of 0.1-5% by weight of the carrier;
b) the carrier consists of rice flour derived from long grain type rice, wherein said rice flour is added to the mixture prior to extrusion;
c) the carrier consists of cake flour, wherein said cake flour is added to the mixture prior to extrusion.

In a preferred embodiment, the method is characterized by two or more of features a)-c), and in a final preferred embodiment, the method is characterized by all features a)-c).

In one embodiment, blending and extrusion can be performed with the aid of an extruder, e.g. a twin screw extruder. Preferably, the extruder screw includes elements resulting in high shear thereby intensively mixing the mixture. Preferably, the extrusion temperature is about 80-180°C.

The invention furthermore relates to free-flowing powder products (coated carriers) obtainable by such processes.

In a second aspect, the present invention relates to a free-flowing powder product, obtainable by such processes, wherein said product comprises particulate carriers selected from the group consisting of vegetable flours and brans and coated with a surface-active substance of lipid character, wherein said powder product is characterized by one or more of the following features:
a) said powder product comprises inorganic salts in an amount of about 0.1-5%;
b) said powder product comprises (i) coated starch particles and (ii) protein matrix substances, wherein (i) and (ii) are derived from long grain type rice;
c) said powder comprises (i) coated vegetable starch particles as well as (ii) protein matrix substances, wherein (i) and (ii) are derived from vegetable flour;
d) said powder product comprises (i) coated starch particles and (ii) protein matrix substances, wherein (i) and (ii) are derived from cake flour.

In a preferred embodiment, the powder product is characterized by two or more of features a)-d), in another preferred embodiment, the powder product is characterized by three or more of features a)-d), and in yet another preferred embodiment, the powder product is characterized by four or more or of features a)-d).

In a preferred embodiment, the particulate carrier is fully or partly derived from vegetable flour. In a particularly preferred embodiment, the particulate carrier is derived from cake flour wheat having low gluten content and a protein content of 10% or less.

In another preferred embodiment, powder products comprise salt such as sodium-, potassium-, calcium-, magnesium-, or aluminium salts selected from phosphates, polyphosphates, hydrogen phosphates, hydrogen polyphosphates, hexametaphosphates, carbonates, hydrogen carbonates and hydroxides. Examples of suitable salts include: sodium carbonate, potassium carbonate, ammonium carbonate, calcium carbonate, magnesium carbonate, sodium hydrogen carbonate, potassium hydrogen carbonate, ammonium hydrogen carbonate, sodium phosphate, sodium polyphosphate, sodium hydrogen phosphate, sodium hydrogen polyphosphate, sodium hexametaphosphate, potassium phosphate, potassium polyphosphate, potassium hydrogen phosphate, potassium hydrogen polyphosphate, potassium hexametaphosphate, sodium aluminium phosphate as well as any mixture thereof.

In yet another preferred embodiment, the surface-active substance of lipid character is selected from the group consisting of: monoglycerides, mono- and diglycerides, polyglycerol esters, diglycerol esters, lactic acid esters of mono- and diglycerides, acetic acid esters of mono- and diglycerides, sodium stearoyllactyllates, citric acid esters of mono- and diglycerides, mono and diacetyltartaric esters of mono- and diglycerides, tartaric acid esters of mono- and diglycerides, polysorbates, propyleneglycolmonoesters, lecithin, a food-improving surface-active agent such as a dough-improving agent, a dough emulsifier, an antitack agent, a meat water-binding improving agent, an aerating agent for use in the food or bakery industry, an ice cream emulsifier, a fine food emulsifier, a crystal growth-modifying agent for use in confectionery, a pharmaceutical surface-active agent, a cosmetic surface-active agent, as well as any mixtures thereof. Preferably, the surface-active substance is a partial ester of a polyhydric alcohol such as ethylene glycol or glycerol or of a condensate of ethylene glycol or of glycerol, a sugar, or sorbitol, with an edible fatty acid and optionally with lactic acid, citric acid, malic acid, tartaric acid or acetic acid, or a mixture of such esters.

In yet another embodiment the powder product according to the invention comprises 0-20% sucrose, preferably 0-10%, more preferably 0-5%, and most preferably no sucrose.

In a final aspect, the present invention relates to use of such powder products in preparation of baked goods.

It should be noted that embodiments and features described in the context of one of the aspects of the present invention also apply to the other aspects of the invention.

The invention will now be described in further details in the following non-limiting examples.

### Examples

### Example 1

### Extrusion process:

Coextrusion of the carrier and emulsifier has been done on a Clextral BV 45 double screw extruder at a temperature of 120-170°C with a 500 mm screw with the following elements:
1. SF, length 200mm, pitch 50mm
2. SF, length 100mm, pitch 35mm
3. SF, length 50mm, pitch 25mm
4. SF, length 100mm, pitch 15mm
5. RSF, length 50mm, pitch -15mm

A 750 mm screw with an alternative configuration has been used as well at a temperature of 120-150°C:
1. TF, length 200mm, pitch 70mm
2. TF, length 100mm, pitch 50mm
3. TF, length 100mm, pitch 35mm
4. Kneading element, length 50mm, B4, 90°
5. TF, length 100, pitch 25mm
6. Kneading element, length 50mm, B4, 90°
7. TF, length 50, pitch 25mm
8. RTF, length 100mm, pitch -15mm

**Table 1: Extrusion with different rice flour types derived from long grain rice under various conditions:**

| Carrier | 1 | 1 | 1 | 1 | | 2 | 2 | 2 | 2 | 2 | 2 |
|---|---|---|---|---|---|---|---|---|---|---|---|
| Salt addition | - | A | B | C | | - | B | D | - | - | - |
| Emulsifier | A | A | A | A | | A | A | A | A | A | A |
| Screw configuration | 500 | 500 | 500 | 500 | | 500 | 500 | 500 | 750 | 2x500 | 2x500 |
| Rounds/min. | 200 | 200 | 200 | 200 | | 200 | 200 | 200 | 200 | 200+200 | 200+300 |
| Carrier potential (% fat) | 31-35 | 33-38 | 33-38 | 36 | | 26-28 | 26 | 29-30 | 31 | 35 | 35-36 |
| Whipping test (g) | 57 | 57 | 57 | 57 | | 74 | 74 | 74 | 74 | 57 | 57 |
| Whipping number 5 min. | 360 | 340 | 340 | 360 | | 434 | 357 | 365 | 343 | 389 | 364 |
| Whipping number 9 min. | 335 | 330 | 330 | 329 | | 384 | 347 | 358 | 318 | 354 | 344 |

| | | | | | | | | | | | |
|---|---|---|---|---|---|---|---|---|---|---|---|
| Carrier 1 = Remyflo R7-90T, Carrier 2 = Müllers Mühlelangkorn Reismehl. Salt A = 1% Budal 2308 (sodium aluminium phosphate), Salt B = 1% Sodium hexa metaphosphate, Salt C = 1% Sodium hexa metaphosphate supplied via an aqueous solution, D = Müllers Mühle, "Langkorn Reismehl" milled using a Hosokawa Alpine AG mill: particle size was reduced from 53 weight% particles larger than Mesh 140 (106 µm) to 40% and carrier potential was increased from 26 to 29.5% emulsifier. Furthermore, the functionality was also improved in sponge cake batter whipping test. Emulsifier A = E 475 + E 471 Emulsifier B = E 475 + E 471 + E 481 Emulsifier C = E 475 + E 471 + E 433 | | | | | | | | | | | |

Screw configuration: 500 mm, 750 mm, or 2x500 mm (double extrusion).

Whipping numbers after whipping test (sample size): A = 45 g, B = 57 g or C = 74 g.

It appears from table 1 and in particular from the SEM pictures in the figures that extrusion results in a mechanical shear of the flour grains.

It furthermore appears that the carrier potential might be modulated upon e.g. addition of various salts, variation of extrusion parameters, etc.

### Example 2

### Whipping and baking tests:

The test system used for whipping test is a dosage of extruded emulsifier/carrier of 45, 57 or 74 g sample in mixture with 968, 968 or 926 g whipping premix respectively, 500 g fresh eggs and 250 g of tap water. The whipping premix consists of 41.3% sugar, 5.2% skimmed milk powder, 31% wheat flour, 19.4% wheat starch, 0.2% salt and 2.9% baking powder. The whipping machine is a Hobart A200 and the whipping procedure is 1 min. In first drive, then 5 min. in third drive followed by another 4 min. in third drive. 550 g of batter is taken after 5 and 9 min. whipping in third drive and transferred to a spring (260 mm diameter) for baking at 35 minutes at 180°C.

Whipping numbers resulting from whipping testing appear from table 1.

### Example 3

### RVA gelling/pasting temperature:

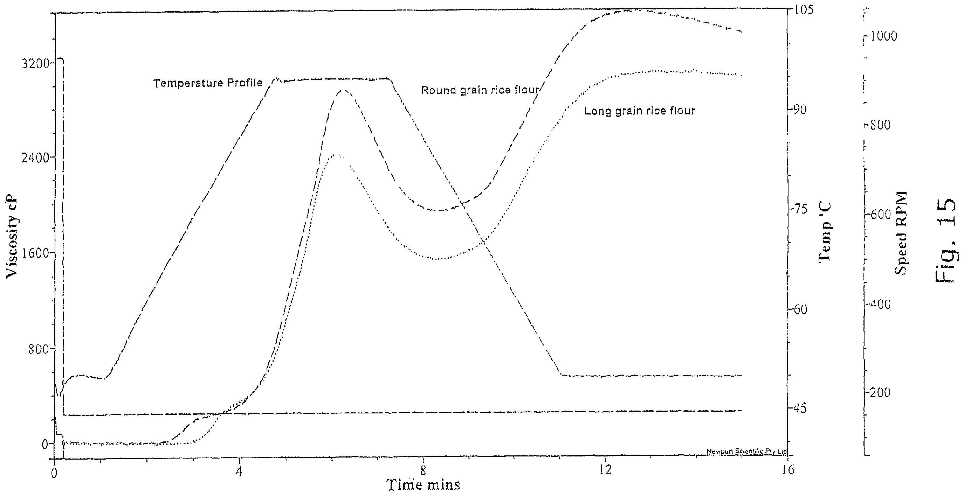

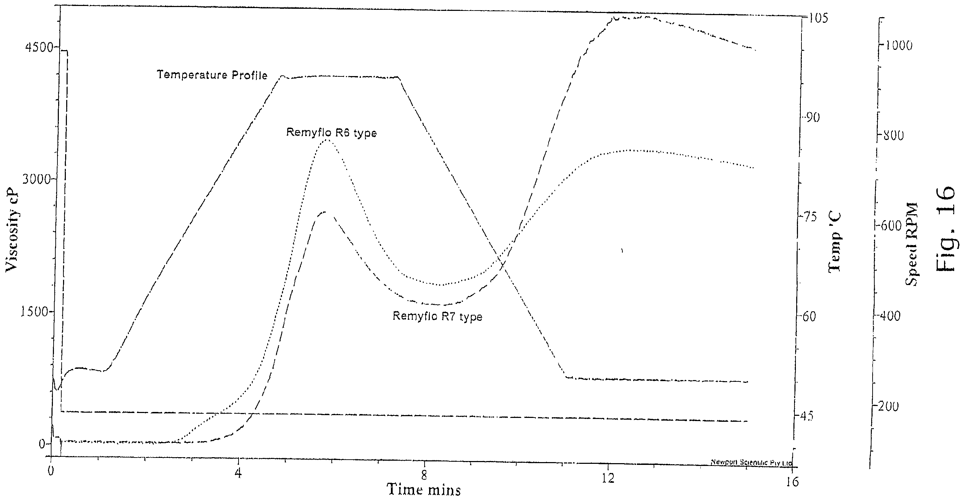

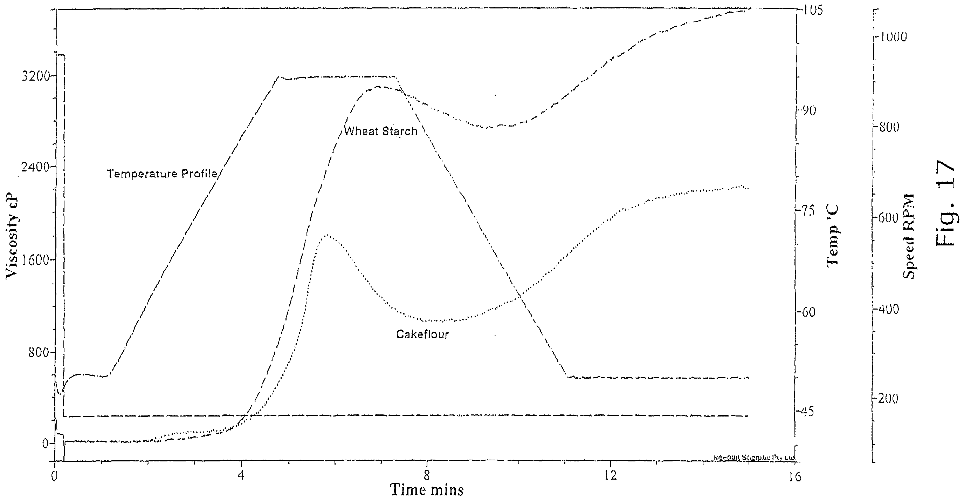

Instrument RVA-4 (Rapid Visco Analyzer) from Newport Scientific, sample 3.0 g of rice flour/starch + 25.0 g distilled (pure) water. After 10 seconds fast stirring and 1 minute at constant temperature 50°C heating under constant stirring and viscosity measurement from 50 to 95°C is done during 3 min and 42 sec. Then temperature is kept constant at 95°C for 2.5 minute and cooling to 50°C is done until total time of 11 minutes. In the end stirring is maintained at constant temperature 50°C to register the full viscosity potential of the sample. Recording of gelling points are illustrated in fig. 15-17 and summarized in table 4.

### Example 4

### Use of coated carriers in sponge cake production:

Results from production scale extrusion of rice flour "Remyflo R7-90T" and the 3 different emulsifier recipes compared with the same emulsifiers and rice starch has given the same whipping functionalities (litre weight of batter after 8 minutes whipping time) in the test systems:

**Table 2: Testing various emulsifier combinations (defined in example1)**

| Emulsifier recipe | Whipping premix | Extrudate dosage | Rice starch | Rice flour |
|---|---|---|---|---|
| A | 968 g | 85 g | 333 g/l | 307 g/l |
| B | 968 g | 85 g | 334 g/l | 354 g/l |
| C | 968 g | 67 g | 277 g/l | 276 g/l |

The test system used for this whipping test is a dosage of extruded emulsifier/carrier of 85 g (67 g) sample in mixture with 968 g whipping premix respectively, 500 g fresh eggs and 250 g of tap water. The whipping premix consists of 41.3% sugar, 5.2% skimmed milk powder, 31% wheat flour, 19.4% wheat starch, 0.2% salt and 2.9% baking powder. The whipping machine is a Hobart A200 and the whipping procedure is 1 min. in first drive, then 8 min. in third drive followed by another 2 min. in first drive. 550 g of batter is transferred to a spring (260 mm diameter) for baking at 35 minutes at 180°C.

In addition to the improved whipping stability and baking properties when the extrudate is used it is also found that the usage of rice flour compared to pure rice starch yields the same shelf life of the baked goods (sponge cakes as well as pound cakes) recorded as a soft and more moist crumb of the cakes together with a fine crumb structure and in general the eating qualities of the baked goods are found to be equal to emulsifier powders based on isolated starch.

Pound cakes: Recipe is 400 g vegetable oil, 400 g sugar, 400 g eggs, 440 g wheat flour and 5 g baking powder. Dosage of extrudates is 32 g (1.9 weight%). Hobart N50 whipping machine equipped with a spatula is used for mixing the ingredients, 1 min. at low speed (first drive) then 5 min. at second drive. 4 times 350 g of dough is then baked in tins at 180°C for 50 min. Surprisingly the application of rice flour based extrudates are adding extra volume (TexVol Instruments, BVM-3- this instrument measures bread volume by means of ultra sound) to the pound cakes compared to the same dosage of rice starch based extrudates:

**Table 3: Cake volume using coated carriers based on either rice starch or rice flour (Emulsifier recipe: Ex. 1)**

| Emulsifier recipe | Rice starch | Rice flour |
|---|---|---|
| A | Index 100 | Index 111 |
| B | Index 100 | Index 108 |
| C | Index 100 | Index 106 |

### Example 5

### Features and parameters for various carrier types

**Table 4: Various parameters for different carrier types.**

| Analysis-parameter | Müllers Mühle "Langkorn Reismehl" | Bayrische Reismuhle "Langkorn Reispudermehl" | Boost Nutrition "Riceflour" | Rickmers Reismuhle "Reispuder" | Mullers Mühle Rundkorn Reismehl | Remy "Remyflo C200" | Remy "Remyflo R6-200" | Remy "Remyflo R7-200T" | Remy "Remy-flo R7-90T" | "Rice starch" | Cerealia "Cake flour" | "Wheat starch" |
|---|---|---|---|---|---|---|---|---|---|---|---|---|
| Water content (%) | 12.5 | 13.3 | 12.2 | 11.7 | 13.2 | 9.7 | 9.2 | 8.9 | 12.8 | 12.0 | 10.8 | 12.7 |
| (g/l) | 524 | 554 | 581 | 614 | - | 421 | 638 | 470 | 328-338 | 370-430 | - | - |
| Fat (%) | 0.5 | 0.5 | 0.5 | 0.2 | <1 | 3.8 | 0.5 | 0.7 | 0.2 | <1 | - | <1 |
| Protein (%) | 7.5 | 7.4 | 7.6 | 7.7 | 6.2 | 7.5 | 6.3 | 7.5 | 4.3 | <1 | 9.2 | <1 |
| RVA PT (°C) | 75-78 | 73-75 | 74-77 | 77-78 | 68-70 | - | 72-73 | 82-83 | 79-81 | 79-81 | 83-84 | 82-84 |
| Emulsifier (A) carrier potential (%) | 26-28 | 27-28 | 26-28 | - | - | - | - | 27-28 | 31-35 | 35-37 | 22-23 | 22-23 |
| Mesh 70 | 0.8 | 0.4 | 2.4 | 20,.1 | 3.6 | 16.5 | 12.3 | 5.0 | 5.4 | 15.7 | 1.4 | 2.0 |
| Mesh 100 | 20.9 | 7.6 | 36.3 | 14.1 | 40.4 | 30.6 | 20.4 | 15.3 | 9.2 | 11.7 | 9.4 | 4.0 |
| Mesh 140 | 31.3 | 52.4 | 25.0 | 14.9 | 26.0 | 46.7 | 32.9 | 44.7 | 3.6 | 12.9 | 41.4 | 6.2 |
| Mesh 170 | 8.4 | 11.2 | 6.0 | 6.4 | 8.8 | 1.2 | 5.8 | 14.5 | 3.4 | 5.2 | 28.1 | 3.8 |
| Mesh <170 | 38.6 | 28.4 | 30.2 | 44.6 | 21.2 | 5.0 | 28.6 | 20.5 | 78.3 | 54.4 | 19.7 | 83.9 |
| Mesh 140 to <170 | 78.3 | 92.0 | 61.2 | 65.9 | 56.0 | 52.9 | 67.3 | 79.7 | 85.3 | 72.5 | 89.2 | 93.9 |
| Total germ | 3300 | 23000 | 34000 | | | 10800 | 5900 | 8600 | 600 | | | |

Table 4 represents a summary of the properties of the various carrier types discussed herein. It should be noted that carrier potential of the various raw materials in table 4 are carrier potential recorded without any addition of salt and without varying extrusion parameters and without any additional milling. It appears from the examples above that carrier potential as well as other parameters may be affected in various ways.

The product consisting of the emulsifier combined to the rice flour appear as a white, free-flowing powder with a neutral or fine flavour of rice which easily can be blended with baking flour sugar, egg and dairy powder as well as baking soda and cocoa or other spice (flavour) powders to yield a ready cake mix for household, craftsman or industrial baking.

## Claims

1. A method of preparing a free flowing powder product, wherein said powder product comprises particulate carriers coated with a surface-active substance of lipid character, wherein such particulate carriers are selected from the group consisting of vegetable flours and vegetable brans and wherein said method comprises preparing a mixture by mixing one or more surface-active substances of lipid character in an amount of at least 10% by weight with one or more particulate carriers and optionally water in an amount of 0.1-5% by weight, and extruding the mixture through one or more orifices; wherein said method is further **characterized by** one or more of the following features:
a) one or more inorganic salts are added to the mixture prior to extrusion in an amount of 0.1 - 5% by weight of the carrier;
b) the carrier consists of rice flour derived from long grain type rice, wherein said rice flour is added to the mixture prior to extrusion;
c) the carrier consists of cake flour, wherein said cake flour is added to the mixture prior to extrusion.

2. A method according to claim 1, wherein blending and extrusion is done with the aid of a twin screw extruder.

3. A method according to any one of claims 1-2, wherein the extrusion takes places at a temperature of about 80-180°C.

4. A method according to any one of claims 1-3, wherein the configuration of the extruder screw include elements resulting in high shear.

5. A method according to any one of claims 1-4, wherein the configuration of the extruder screw include elements of the reverse screw type.

6. A free flowing powder product obtainable by a method according to any one of claims 1-5.

7. A free flowing powder product according to claim 6, wherein said powder product comprises particulate carriers selected from the group consisting of vegetable flours and vegetable brans and coated with a surface-active substance of lipid character, wherein said powder product is **characterized by** one or more of the following features:
a) said powder product comprises inorganic salts in an amount of 0.1 - 5%;
b) said powder product comprises (i) coated starch particles and (ii) protein matrix substances, wherein (i) and (ii) are derived from long grain type rice;
c) said powder comprises (i) coated vegetable starch particles as well as (ii) protein matrix substances, wherein (i) and (ii) are derived from vegetable flour;
d) said powder product comprises (i) coated starch particles and (ii) protein matrix substances, wherein (i) and (ii) are derived from cake flour.

8. A powder product according to any one of claims 6 or 7, wherein the particulate carrier is fully or partly derived from vegetable flour.

9. A powder product according to any one of claims 6-8, wherein the particulate carrier is derived from wheat having a low gluten content and a protein content of 10% or less.

10. A powder product according to any one of claims 6 or 7, wherein the particulate carrier is selected from the group consisting of bean flour, pea flour, rice flour, potato flour, corn flour, wheat flour, rye flour, barley flour, Chinese water chestnut flour, oat flour, as well as any mixture thereof.

11. A powder product according to any one of claims 6-10, wherein the salt is selected from one or more of sodium-, potassium-, calcium-, magnesium-, or aluminium salts selected from phosphates, polyphosphates, hydrogenphosphates, hydrogenpolyphosphates, hexametaphosphates, carbonates, hydrogencarbonates and hydroxides.

12. A powder product according to claim 11, wherein the salt is selected from the group consisting of: sodium carbonate, potassium carbonate, ammonium carbonate, calcium carbonate, magnesium carbonate, sodium hydrogencarbonate, potassium hydrogencarbonate, ammonium hydrogencarbonate, sodium phosphate, sodium polyphosphate, sodium hydrogenphosphate, sodium hydrogenpolyphosphate, sodium hexametaphosphate, potassium phosphate, potassium polyphosphate, potassium hydrogenphosphate, potassium hydrogenpolyphosphate, potassium hexametaphosphate, and sodium aluminium phosphate.

13. A powder product according to any of claims 6-12, wherein the surface-active substance of lipid character is selected from the group consisting of: monoglycerides, mono- and diglycerides, polyglycerolesters, diglycerolesters, lactic esters of mono- and diglycerides, lactic esters of monoglycerides, sodiumstearoyllactyllates, citric esters of monoglycerides, diacetytartaric esters of monoglycerides, polysorbates, propyleneglycolmonoesters, lecithin, a food-improving surface-active agent such as a dough-improving agent, a dough emulsifier, an antitack agent, a meat water-binding improving agent, an aerating agent for use in the food or bakery industry, an ice cream emulsifier, a fine food emulsifier, a crystal growth-modifying agent for use in confectionery, a pharmaceutical surface-active agent and a cosmetic surface-active agent.

14. A powder product according to claim 13, wherein the surface-active substance is a partial ester of a polyhydric alcohol such as ethylene glycol or glycerol or of a condensate of ethylene glycol or of glycerol, a sugar, or sorbitol, with an edible fatty acid and optionally with lactic acid, citric acid, malic acid, tartaric acid or acetic acid, or a mixture of such esters.

15. A powder product according to any one of claims 6-14, wherein said product comprises 0-20% sucrose.

16. Use of a powder according to any of claims 6-14 in preparation of baked goods.

## Patentansprüche

1. Verfahren zur Herstellung eines frei fließenden Pulverprodukts, wobei das Pulverprodukt teilchenförmige Träger, beschichtet mit einer oberflächenaktiven Substanz von Lipidcharakter, umfasst, wobei solche teilchenförmigen Träger ausgewählt sind aus der Gruppe, bestehend aus Pflanzenmehlen und Pflanzenkleien und wobei das Verfahren Herstellen eines Gemisches durch Mischen einer oder mehrerer oberflächenaktiver Substanzen von Lipidcharakter in einer Menge von mindestens 10 Gew.-% mit einem oder mehreren teilchenförmigen Trägern und gegebenenfalls Wasser in einer Menge von 0,1-5 Gew.-%, und Extrudieren des Gemisches durch eine oder mehrere Öffnungen umfasst; wobei das Verfahren weiter durch eines oder mehrere der nachstehenden Merkmale gekennzeichnet ist:
a) ein oder mehrere anorganische Salze werden zu dem Gemisch vor der Extrusion in einer Menge von 0,1 - 5 Gew.-% des Trägers gegeben;
b) der Träger besteht aus Reismehl, abgeleitet von Langkornreis, wobei das Reismehl vor der Extrusion zu dem Gemisch gegeben wird;
c) der Träger besteht aus Auszugsmehl, wobei das Auszugsmehl vor der Extrusion zu dem Gemisch gegeben wird.

2. Verfahren nach Anspruch 1, wobei Mischen und Extrusion mit Hilfe von einem Doppelschneckenextruder ausgeführt wird.

3. Verfahren nach einem der Ansprüche 1-2, wobei die Extrusion bei einer Temperatur von etwa 80-180°C stattfindet.

4. Verfahren nach einem der Ansprüche 1-3, wobei die Konfiguration der Extruderschnecke Elemente beinhaltet, die Hochscheren ergeben.

5. Verfahren nach einem der Ansprüche 1-4, wobei die Konfiguration der Extruderschnecke Elemente beinhaltet, die von dem Umkehrschneckentyp sind.

6. Frei fließendes Pulverprodukt, erhältlich durch ein Verfahren nach einem der Ansprüche 1-5.

7. Frei fließendes Pulverprodukt nach Anspruch 6, wobei das Pulverprodukt teilchenförmige Träger, ausgewählt aus der Gruppe, bestehend aus Pflanzenmehlen und Pflanzenkleien, und beschichtet mit einer oberflächenaktiven Substanz von Lipidcharakter umfasst, wobei das Pulverprodukt durch eines oder mehrere der nachstehenden Merkmale gekennzeichnet ist:
a) das Pulverprodukt umfasst anorganische Salze in einer Menge von 0,1 - 5%;
b) das Pulverprodukt umfasst (i) beschichtete Stärketeilchen und (ii) Proteinmatrixsubstanzen, wobei (i) und (ii) von Langkornreis abgeleitet sind;
c) das Pulver umfasst (i) beschichtete Pflanzenstärketeilchen sowie (ii) Proteinmatrixsubstanzen, wobei (i) und (ii) von Pflanzenmehl abgeleitet sind;
d) das Pulverprodukt umfasst (i) beschichtete Stärketeilchen und (ii) Proteinmatrixsubstanzen, wobei (i) und (ii) von Auszugsmehl abgeleitet sind.

8. Pulverprodukt nach einem der Ansprüche 6 oder 7, wobei der teilchenförmige Träger vollständig oder teilweise von Pflanzenmehl abgeleitet ist.

9. Pulverprodukt nach einem der Ansprüche 6-8, wobei der teilchenförmige Träger von Weizen mit einem niedrigen Glutengehalt und einem Proteingehalt von 10% oder weniger abgeleitet ist.

10. Pulverprodukt nach einem der Ansprüche 6 oder 7, wobei der teilchenförmige Träger ausgewählt ist aus der Gruppe, bestehend aus Bohnenmehl, Erbsenmehl, Reismehl, Kartoffelmehl, Maismehl, Weizenmehl, Roggenmehl, Gerstenmehl, Chinesischem Wasserkastanienmehl, Hafermehl sowie beliebigem Gemisch davon.

11. Pulverprodukt nach einem der Ansprüche 6-10, wobei das Salz ausgewählt ist aus einem oder mehreren von Natrium-, Kalium-, Calcium-, Magnesium- oder Aluminiumsalzen, ausgewählt aus Phosphaten, Polyphosphaten, Hydrogenphosphaten, Hydrogenpolyphosphaten, Hexametaphosphaten, Carbonaten, Hydrogencarbonaten und Hydroxiden.

12. Pulverprodukt nach Anspruch 11, wobei das Salz ausgewählt ist aus der Gruppe, bestehend aus: Natriumcarbonat, Kaliumcarbonat, Ammoniumcarbonat, Calciumcarbonat, Magnesiumcarbonat, Natriumhydrogencarbonat, Kaliumhydrogencarbonat, Ammoniumhydrogencarbonat, Natriumphosphat, Natriumpolyphosphat, Natriumhydrogenphosphat, Natriumhydrogenpolyphosphat, Natriumhexametaphosphat, Kaliumphosphat, Kaliumpolyphosphat, Kaliumhydrogenphosphat, Kaliumhydrogenpolyphosphat, Kaliumhexametaphosphat, und Natriumaluminiumphosphat.

13. Pulverprodukt nach einem der Ansprüche 6-12, wobei die oberflächenaktive Substanz von Lipidcharakter ausgewählt ist aus der Gruppe, bestehend aus: Monoglyceriden, Mono- und Diglyceriden, Polyglycerinestern, Diglycerinestern, Milchsäureestern von Mono- und Diglyceriden, Michsäureestern von Monoglyceriden, Natriumstearoyllactyllaten, Zitronensäureestern von Monoglyceriden, Diacetylweinsäureestern von Monoglyceriden, Polysorbaten, Propylenglycolmonoestern, Lecithin, einem Nahrungs-verbessernden oberflächenaktiven Mittel, wie ein Teig-verbesserndes Mittel, ein Teigemulgator, ein Antihaftmittel, ein Fleischwasser-bindendes verbesserndes Mittel, ein Belüftungsmittel zur Verwendung in der Nahrungs- oder Bäckereiindustrie, ein Eiscrememulgator, ein Feinkostemulgator, ein Kristallwachstum-modifizierendes Mittel zur Verwendung in der Konditorei, ein pharmazeutisches oberflächenaktives Mittel und ein kosmetisches oberflächenaktives Mittel.

14. Pulverprodukt nach Anspruch 13, wobei die oberflächenaktive Substanz ein Teilester von einem mehrwertigen Alkohol, wie Ethylenglycol oder Glycerin oder von einem Kondensat von Ethylenglycol oder von Glycerin, einem Zucker oder Sorbit, mit einer essbaren Fettsäure und gegebenenfalls mit Milchsäure, Zitronensäure, Äpfelsäure, Weinsäure oder Essigsäure oder einem Gemisch von solchen Estern ist.

15. Pulverprodukt nach einem der Ansprüche 6-14, wobei das Produkt 0-20% Saccharose umfasst.

16. Verwendung eines Pulvers nach einem der Ansprüche 6-14 zur Herstellung von Backwaren.

## Revendications

1. Procédé de préparation d'un produit en poudre à écoulement libre, dans lequel ledit produit en poudre comprend des supports particulaires revêtus d'une substance tensioactive à caractère lipidique, dans lequel lesdits supports particulaires sont sélectionnés parmi le groupe constitué par les farines végétales, et les sons végétaux et dans lequel ledit procédé comprend préparer un mélange en mélangeant une ou plusieurs substance(s) tensioactive(s) à caractère lipidique en une quantité d'au moins 10% en poids, avec un ou plusieurs support(s) particulaire(s), et optionnellement de l'eau en une quantité de 0,1-5% en poids, et extruder du mélange à travers un ou plusieurs orifice(s); dans lequel ledit procédé est en outre **caractérisé par** une ou plusieurs des caractéristiques suivantes:
a) un ou plusieurs sel(s) inorganique(s) est (sont) ajouté(s) au mélange avant l'extrusion en une quantité de 0,01 à 5% en poids du support;
b) le support consiste en de la farine de riz dérivée de riz à grains longs, dans lequel ladite farine de riz est ajoutée au mélange avant l'extrusion,
c) le support consiste en de la farine à gâteau, dans lequel ladite farine à gâteau est ajoutée au mélange avant l'extrusion.

2. Procédé selon la revendication 1, dans lequel le mélange et l'extrusion sont effectués à l'aide d'une extrudeuse à double vis.

3. Procédé selon l'une quelconque des revendications 1-2, dans lequel l'extrusion a lieu à une température d'environ 80-180°C.

4. Procédé selon l'une quelconque des revendications 1-3, dans lequel la configuration de la vis de l'extrudeuse inclut des éléments entraînant un cisaillement élevé.

5. Procédé selon l'une quelconque des revendications 1-4, dans lequel la configuration de la vis de l'extrudeuse inclut des éléments du type à vis inverse.

6. Produit en poudre à écoulement libre pouvant être obtenu par un procédé selon l'une quelconque des revendications 1-5.

7. Produit en poudre à écoulement libre selon la revendication 6, dans lequel ledit produit en poudre comprend des supports particulaires choisis dans le groupe constitué par les farines végétales, et les sons végétaux et sont revêtus d'une substance tensioactive à caractère lipidique, dans lequel ledit produit en poudre est **caractérisé par** une ou plusieurs des caractéristiques suivantes:
a) ledit produit en poudre comprend des sels inorganiques en une quantité de 0,01 à 5%;
b) ledit produit en poudre comprend (i) des particules d'amidon enrobées et (ii) des substances de la matrice protéinique, dans lequel (i) et (ii) sont dérivés de riz de type à grains longs;
c) ladite poudre comprend (i) des particules d'amidon végétal enrobées ainsi que (ii) des substances de la matrice protéinique, dans laquelle (i) et (ii) sont dérivés de farine végétale;
d) ladite poudre comprend (i) des particules d'amidon enrobées et (ii) des substances de la matrice protéinique, dans laquelle (i) et (ii) sont dérivés de la farine à gâteau.

8. Produit en poudre selon l'une quelconque des revendications 6 ou 7, dans lequel le support particulaire est entièrement ou partiellement dérivé de la farine végétale.

9. Produit en poudre selon l'une quelconque des revendications 6-8, dans lequel le support particulaire est dérivé du blé présentant une faible teneur en gluten et une teneur en protéines de 10% ou moins.

10. Produit en poudre selon l'une quelconque des revendications 6 ou 7, dans lequel le support particulaire est choisi dans le groupe constitué par la farine de haricot, la farine de pois, la farine de riz, la farine de pomme de terre, la farine de maïs, la farine de blé, la farine de seigle, la farine d'orge, la farine de châtaigne d'eau, la farine d'avoine ainsi que leurs mélanges.

11. Produit en poudre selon l'une quelconque des revendications 6-10, dans lequel le sel est choisi parmi un ou plusieurs sel(s) de sodium, de potassium, de calcium, de magnésium ou d'aluminium choisis parmi les phosphates, les polyphosphates, les hydrogénophosphates, les hydrogénopolyphosphates, les hexamétaphosphates, les carbonates, les hydrogénocarbonates et les hydroxydes.

12. Produit en poudre selon la revendication 11, dans lequel le sel est choisi dans le groupe constitué par: le carbonate de sodium, le carbonate de potassium, le carbonate d'ammonium, le carbonate de calcium, le carbonate de magnésium, l'hydrogénocarbonate de sodium, l'hydrogénocarbonate de potassium, l'hydrogénocarbonate d'ammonium, le phosphate de sodium, le polyphosphate de sodium, l'hydrogénophosphate de sodium, l'hydrogénopolyphosphate de sodium, l'hexamétaphosphate de sodium, le phosphate de potassium, le polyphosphate de potassium, l'hydrogénophosphate de potassium, l'hydrogénopolyphosphate de potassium, l'hexamétaphosphate de potassium, et le phosphate d'aluminium et de sodium.

13. Produit en poudre selon l'une quelconque des revendications 6-12, dans lequel la substance tensioactive à caractère lipidique est choisie dans le groupe constitué par: les monoglycérides, les mono et diglycérides, les polyglycérolesters, les diglycérolesters, les esters lactiques de mono- et diglycérides, les esters lactiques de monoglycérides, de stéaroyl-lactyllates de sodium, d'esters citriques de monoglycérides, d'esters diacétylartriques de monoglycérides, les polysorbates, les propylèneglycolmonoesters, la lécithine, un agent tensio-actif améliorant un produit alimentaire tel qu'un agent tensio-actif améliorant la pâte, un émulsifiant de pâte, un émulsifiant antitack, un agent améliorant la liaison à l'eau de la viande, un agent d'aération pour une utilisation dans l'industrie alimentaire ou de boulangerie, un émulsifiant pour crème glacée, un émulsifiant pour aliments fins, un agent de modification de la croissance des cristaux pour une utilisation dans la confiserie, un agent tensioactif pharmaceutique et un agent tensioactif cosmétique.

14. Produit en poudre selon la revendication 13, dans lequel la substance tensioactive est un ester partiel d'un alcool polyhydrique tel que l'éthylène glycol ou le glycérol ou d'un condensé d'éthylène glycol ou de glycérol, d'un sucre ou de sorbitol, avec un acide gras comestible et optionnellement avec de l'acide lactique, de l'acide citrique, de l'acide malique, de l'acide tartrique ou de l'acide acétique, ou un mélange de tels esters.

15. Produit en poudre selon l'une quelconque des revendications 6-14, dans lequel ledit produit comprend de 0 à 20% de saccharose.

16. Utilisation d'une poudre selon l'une quelconque des revendications 6-14 pour une la préparation de produits de boulangerie.
